# EUROPÄISCHE PATENTANMELDUNG

(11) **EP 3 078 616 A1**
(43) Veröffentlichungstag der Anmeldung: **12.10.2016**
(21) Anmeldenummer: 16000784.5
(22) Anmeldetag: 06.04.2016
(51) Int. Cl.: B65G 49/04

(54) **TAUCHBEHANDLUNGSANLAGE ZUM TAUCHBEHANDELN VON GEGENSTÄNDEN**

(30) Priorität: 08.04.2015 DE 202015002578 U
(71) Anmelder: Eisenmann SE, 71032 Böblingen (DE)
(72) Erfinder: Schulze, Herbert, 71134 Aidlingen (DE)
(74) Vertreter: Ostertag & Partner Patentanwälte

(57) **Zusammenfassung**

Eine Tauchbehandlungsanlage zum Tauchbehandeln von Gegenständen (12), insbesondere von Fahrzeugkarosserien (14), umfasst mindestens ein Tauchbecken (16), welches mit einer Behandlungsflüssigkeit (18) füllbar ist, in welche die zu behandelnden Gegenstände (12) eingetaucht werden können, sowie ein Fördersystem (22), welches die zu behandelnden Gegenstände (12) an das Tauchbecken (16) heran, in den Innenraum des Tauchbeckens (16) hinein, aus dem Tauchbecken (16) heraus und von diesem wegbewegen kann, und welches wenigstens eine Transporteinheit umfasst, die mit einer Befestigungseinrichtung (26) lösbar koppelbar ist, an welcher ein Gegenstand (12) befestigbar ist. Das Tauchbecken (12) umfasst eine Tragvorrichtung (42), welche in der Lage ist, die von der Transporteinheit (24) getrennte Befestigungseinrichtung (26) zu tragen. Die Tragvorrichtung (42) weist eine Bewegungseinrichtung (46) und wenigstens ein Tragelement (44) auf, welches mittels der Bewegungseinrichtung (46) derart beweglich ist, dass die von der Tragvorrichtung (42) getragene Befestigungseinrichtung (26) zwischen wenigstens zwei Tauchausrichtungen bewegbar ist, und/oder die Tragvorrichtung weist eine Positioniereinrichtung und wenigstens ein Tragelement auf, welches mittels der Positioniereinrichtung zwischen einer Tragposition, in welcher es die Befestigungseinrichtung tragen kann, und einer davon verschiedenen Parkposition beweglich ist.

## Beschreibung

Die Erfindung betrifft eine Tauchbehandlungsanlage zum Tauchbehandeln von Gegenständen, insbesondere von Fahrzeugkarosserien, mit
a) mindestens einem Tauchbecken, welches mit einer Behandlungsflüssigkeit füllbar ist, in welche die zu behandelnden Gegenstände eingetaucht werden können;
b) einem Fördersystem, welches die zu behandelnden Gegenstände an das Tauchbecken heran, in den Innenraum des Tauchbeckens hinein, aus dem Tauchbecken heraus und von diesem wegbewegen kann, und welches wenigstens eine Transporteinheit umfasst, die mit einer Befestigungseinrichtung lösbar koppelbar ist, an welcher ein Gegenstand befestigbar ist;
   wobei
c) das Tauchbecken eine Tragvorrichtung umfasst, welche in der Lage ist, die von der Transporteinheit getrennte Befestigungseinrichtung mit daran befestigtem Gegenstand zu tragen.
   Eine derartige Tauchbehandlungsanlage ist beispielsweise aus der DE 10 2013 2017 794 A1 bekannt. Dort werden Fahrzeugkarosserien in das Tauchbecken eingebracht und die Befestigungseinrichtung von der Tragvorrichtung aufgenommen. Die Transporteinheit wird dann von der Befestigungseinrichtung getrennt und die Fahrzeugkarosserie verbleibt stationär ruhend im Tauchbad.
   Es ist Aufgabe der Erfindung, eine Tauchbehandlungsanlage der eingangs genannten Art zu schaffen, bei welcher das Behandlungsergebnis verbessert sein kann.
   Diese Aufgabe wird dadurch gelöst, dass
d) die Tragvorrichtung eine Bewegungseinrichtung und wenigstens ein Tragelement aufweist, welches mittels der Bewegungseinrichtung derart beweglich ist, dass die von der Tragvorrichtung getragene Befestigungseinrichtung zwischen wenigstens zwei Tauchausrichtungen bewegbar ist;
   und/oder
e) die Tragvorrichtung eine Positioniereinrichtung und wenigstens ein Tragelement aufweist, welches mittels der Positioniereinrichtung zwischen einer Tragposition, in welcher es die Befestigungseinrichtung tragen kann, und einer davon verschiedenen Parkposition beweglich ist.

Erfindungsgemäß kann der Gegenstand durch diese Maßnahmen auch dann mit Hilfe der Bewegungseinrichtung im Tauchbecken bewegt werden, wenn die Transporteinheit von der Befestigungseinrichtung entkoppelt und vom Tauchbecken wegbewegt wurde. Dadurch kann bewirkt werden, dass die Behandlungsflüssigkeit schneller und gegebenenfalls auch vollständiger unzugängliche Bereiche des Gegenstandes benetzt. Im Falle einer Fahrzeugkarosserie können solche Bereiche beispielsweise Kavitäten oder Hinterschneidungen sein. Wenn lediglich die Positioniereinrichtung vorhanden ist, können die Tragelemente von der Bewegungskontur der Befestigungseinrichtung weg bewegt werden. Eine ergänzende Bewegung des Gegenstandes kann dann mit Hilfe der Transporteinheit erfolgen. Dies wird weiter unten näher erläutert.

Es ist insbesondere günstig, wenn das Tragelement in vertikaler Richtung oder zumindest mit einer vertikalen Bewegungskomponente bewegt werden kann.

Vorzugseise sind an jeder Stirnseite und/oder an jeder Längsseite des Tauchbeckens ein oder mehrere bewegliche Tragelemente vorgesehen. Abhängig von der Anzahl der vorhandenen Tragelemente, die mit der Bewegungseinrichtung zusammenarbeiten, kann die Bewegungskinematik des Gegenstandes im Tauchbecken verändert werden.

Eine vorteilhafte Bewegung des Gegenstandes im Tauchbecken kann erreicht werden, wenn das Tauchbecken eine Längsachse definiert und das bewegliche Tragelement ein Tragrahmen ist, welcher um eine horizontale Schwenkachse parallel zur Längsachse des Tauchbeckens und/oder um eine horizontale Schwenkachse quer zur Längsachse des Tauchbeckens verschwenkbar gelagert ist. Wenn beide Schwenkachsen ausgebildet sein sollen, ist eine kardanische Aufhängung des Tragrahmens von Vorteil.

Alternativ kann das Tragelement von der Befestigungseinrichtung umfasst sein. In diesem Fall verbleibt vorzugsweise die Bewegungseinrichtung am Tauchbecken, die dann mit dem Tragelement zusammenarbeitet, wenn die Befestigungseinrichtung mit dem Gegenstand zum Tauchbecken bewegt wurde.

Es ist günstig, wenn die Bewegungseinrichtung wenigstens eine Zylindereinheit und/oder wenigstens eine Teleskopeinheit und/oder Zugmittel umfasst, die mit jeweils mindestens einem Tragelement gekoppelt sind.

Ein vorteilhafter Bewegungsmechanismus kann ausgebildet sein, wenn die Positioniereinrichtung derart eingerichtet ist, dass das Tragelement um eine Achse verschwenkt oder linear bewegt werden kann.

Im Falle einer Schwenkachse ist es günstig, wenn diese Achse vertikal verläuft. So kann das Tragelement stets oberhalb der Behandlungsflüssigkeit bewegt werden.

Nachstehend werden Ausführungsbeispiele der Erfindung anhand der Zeichnungen näher erläutert. In diesen zeigen:
Figur 1 eine schematische Teilansicht einer Tauchbehandlungsanlage, wobei ein Tauchbecken mit darin eingetauchter Fahrzeugkarosserie perspektivisch gezeigt ist, welche mit einer Befestigungseinrichtung gekoppelt ist, die von einer Tragvorrichtung des Tauchbeckens bewegbar getragen ist;
Figuren 2 bis 4 jeweils der Figur 1 entsprechende Ansichten der Tauchbehandlungsanlage mit jeweils einer abgewandelten Tragvorrichtung;
Figur 5 eine seitliche Teilansicht der Tauchbehandlungsanlage mit einer nochmals abgewandelten Tragvorrichtung;
Figuren 6 und 7 jeweils Ansichten auf die Stirnseiten des Tauchbeckens mit erneut abgewandelten Tragvorrichtungen;
Figuren 8 wieder eine der Figur 1 entsprechende Ansicht der Tauchbehandlungsanlage mit einer abermals abgewandelten Tragvorrichtung, bei welcher Tragelemente zwischen einer Tragposition und einer Parkposition beweglich sind und in der Parkposition gezeigt sind;
Figur 9 die Tauchbehandlungsanlage nach Figur 8 mit den Tragelementen in der Tragposition;
Figuren 10A, B, C schematisch drei Phasen eines Eintauchvorgangs bei der Tauchbehandlungsanlage nach den Figuren 8 und 9;
Figuren 11A, B, C schematisch drei Phasen eines Eintauchvorgangs bei einer Tauchbehandlungsanlage mit einer nochmals gegenüber den Figuren 8 und 9 abgewandelten Tragvorrichtung.

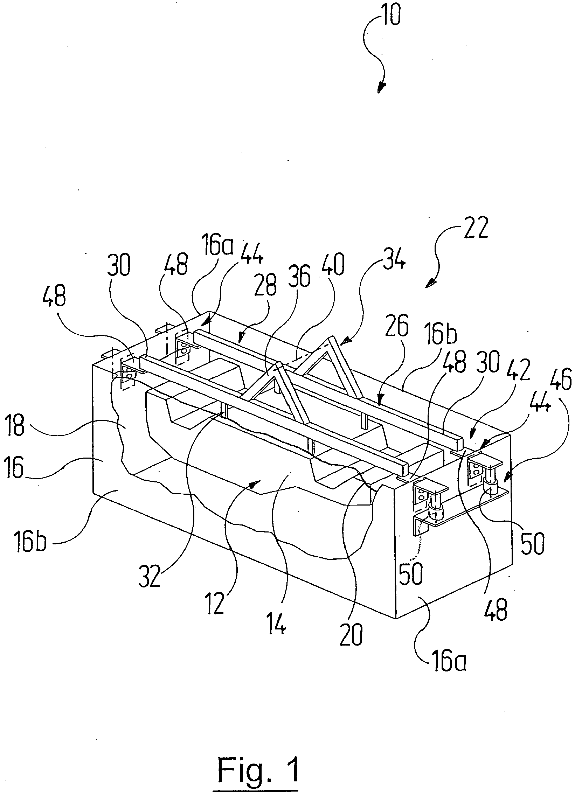

Zunächst wird auf Figur 1 Bezug genommen. Diese zeigt eine schematische Teilansicht einer Tauchbehandlungsanlage 10 zum Tauchbehandeln von Gegenständen 12, welche beispielhaft als Fahrzeugkarosserien 14 veranschaulicht sind. Die Tauchbehandlungsanlage 10 umfasst mehrere Tauchbecken 16, von denen in den Figuren jeweils lediglich eines gezeigt ist und von denen einige oder alle in der Weise ausgebildet sein können, wie es nachfolgend beschrieben ist.

Das Tauchbecken 16 umfasst zwei Stirnwände 16a und zwei Längswände 16b, die nicht in allen Figuren bezeichnet sind, und kann mit einer Behandlungsflüssigkeit 18 bis zu einem Flüssigkeitsspiegel 20 gefüllt werden und ist derart dimensioniert, dass die Gegenstände 12 vollständig in die Behandlungsflüssigkeit 18 eingetaucht werden können. Dies gilt für alle Ausführungsbeispiele, wobei der Flüssigkeitsspiegel 20 lediglich in den Figuren 1, 5 bis 7 sowie 10 und 11 gezeigt ist. Bei der Behandlungsflüssigkeit 20 kann es sich insbesondere um einen Lack oder auch um Flüssigkeiten zum Reinigen und Entfetten der Gegenstände 12 handeln.

Die Tauchbehandlungsanlage 10 umfasst ein Fördersystem 22, welches die zu behandelnden Gegenstände 12 an das Tauchbecken 16 heran, in den Innenraum des Tauchbeckens 16 hinein, aus dem Tauchbecken 16 heraus und von diesem wegbewegen kann und welches wenigstens eine Transporteinheit 24 umfasst, die mit einer Befestigungseinrichtung 26 lösbar koppelbar ist, an welcher ein Gegenstand 12 befestigt werden kann.

Die Befestigungseinrichtung 26 ist nach Art eines an und für sich bekannten Förderskids ausgebildet und umfasst eine Tragstruktur 28, welche zwei Längsprofile 30 aufweist. Diese Längsprofile 30 tragen Verriegelungselemente 32, welche in vorgegebene Haltebauteile der Fahrzeugkarosserie 14 eingreifen und zusammenwirken können, so dass die Fahrzeugkarosserie 14 fest an der Befestigungseinrichtung 26 verriegelt ist. Von den Verriegelungselementen 32 ist nur in Figur 1 und dort lediglich ein Verriegelungselement mit einem Bezugszeichen versehen.

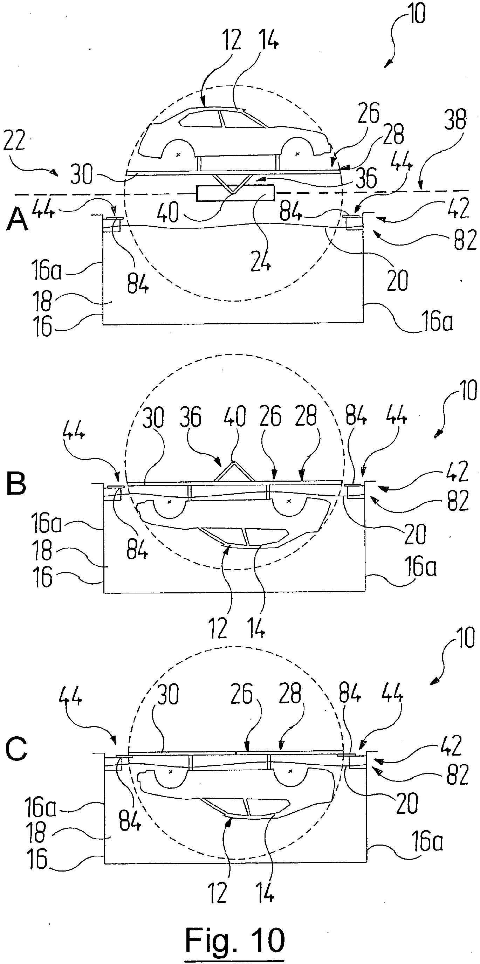

Von der Transporteinheit 24 ist in Figur 1 lediglich eine von einer Drehvorrichtung 34 geführte Koppeleinrichtung 36 gezeigt, mittels welcher die Befestigungseinrichtung 26 in an und für sich bekannter Weise lösbar mit der Transporteinheit 24 gekoppelt werden kann. Die Transporteinheit 24 kann beispielsweise als Transportwagen ausgebildet sein, welcher in beide Richtungen entlang einer Förderstrecke bewegbar ist. Hierzu umfasst das Fördersystem 22 in ebenfalls bekannter Weise ein Schienensystem 38, auf dem die Transporteinheiten 24 verfahren können. Die Transporteinheit 24 und das Schienensystem 38 sind einzig in Figur 10A stark schematisch angedeutet.

Die Drehvorrichtung 34 ermöglicht es, dass die Koppeleinrichtung 36 um eine Drehachse 40 verdreht werden kann, die horizontal und senkrecht zur Längsrichtung des Tauchbeckens 16 verläuft. Wenn die Befestigungseinrichtung 26 eine Fahrzeugkarosserie 14 trägt und mit der Transporteinheit 24 gekoppelt ist, kann durch die Drehvorrichtung 28 demzufolge die Fahrzeugkarosserie 14 um die Drehachse 40 verdreht werden.

So kann die Fahrzeugkarosserie 14 von einer Förderposition, in der sie Dach oben ausgerichtet ist, in eine Tauchposition, in der sie Dach unten ausgerichtet ist, und wieder zurück bewegt werden. Für die Dauer des Behandlungsvorgangs wird die Fahrzeugkarosserie 14 mit Hilfe des Fördersystems 22 in das Tauchbecken 16 hinein gefördert und hiernach von der Transporteinheit 24 getrennt, so dass die Befestigungseinrichtung 26 mit der daran befestigten Fahrzeugkarosserie 14 an dem Tauchbecken 16 verbleibt. Bei den in den Figuren 1 bis 9 gezeigten Tauchbehandlungsanlagen 10 wird die Fahrzeugkarosserie 14 dazu zunächst oberhalb des Flüssigkeitsspiegels 20 in die Tauchposition gedreht und dann durch eine vertikale Bewegung in das Tauchbecken 16 abgesenkt und dort abgelegt.

Hierfür umfasst das Tauchbecken 16 nun seinerseits eine Tragvorrichtung 42, welche in der Lage ist, die von der Transporteinheit 24 getrennte Befestigungseinrichtung 26 mit dem daran befestigen Gegenstand 12 zu tragen. Die Tragvorrichtung 42 weist hierfür wenigstens ein Tragelement 44, auf welchem die Befestigungseinrichtung 26 abgelegt werden kann.

Außerdem umfasst die Tragvorrichtung 42 eine Bewegungseinrichtung 46, mittels welcher dieses Tragelement 44 derart bewegt werden, dass die von der Tragvorrichtung 42 getragene Befestigungseinrichtung 26 zwischen wenigstens zwei Tauchausrichtungen bewegbar ist. Somit kann die Fahrzeugkarosserie 14 im Tauchbad bewegt werden.

Bei dem in Figur 1 gezeigten Ausführungsbeispiel sind vier Tragelemente 44 in Form von Tragplatten 48 vorhanden, die so angeordnet und dimensioniert sind, dass die Befestigungseinrichtung 26 mit den jeweiligen Enden ihrer Längsprofile 30 auf diese Tragplatten 48 abgesenkt und von diesen aufgenommen werden kann. Die Bewegungseinrichtung 46 ist derart eingerichtet, dass das Tragelement 44 in vertikaler Richtung bewegt werden kann.

Die Bewegungseinrichtung 46 umfasst für jede Tragplatte 48 eine Zylindereinheit 50, die mit jeweils einer Tragplatte 48 derart gekoppelt ist, das die Tragplatte 48 in vertikaler Richtung bewegt werden kann. Auf diese Weise kann die Befestigungseinrichtung 26 an den jeweiligen Enden ihrer Längsprofile 30 angehoben oder abgesenkt werden, wodurch die Fahrzeugkarosserie 14 während der Tauchbehandlung in der Behandlungsflüssigkeit 20 bewegt werden kann.

Grundsätzlich sind an den Tragelementen 44 Anschlagbauteile vorhanden, welche ein Abrutschen der Befestigungseinrichtung 26 bei deren Bewegung im Tauchbad verhindern. Im Falle einer an und für sich bekannten kataphoretischen Tauchbehandlung sind die Tragelemente 44 als elektrische Kontakte ausgebildet, über welche die Fahrzeugkarosserie 14 mit der notwendigen Spannung beaufschlagt werden kann.

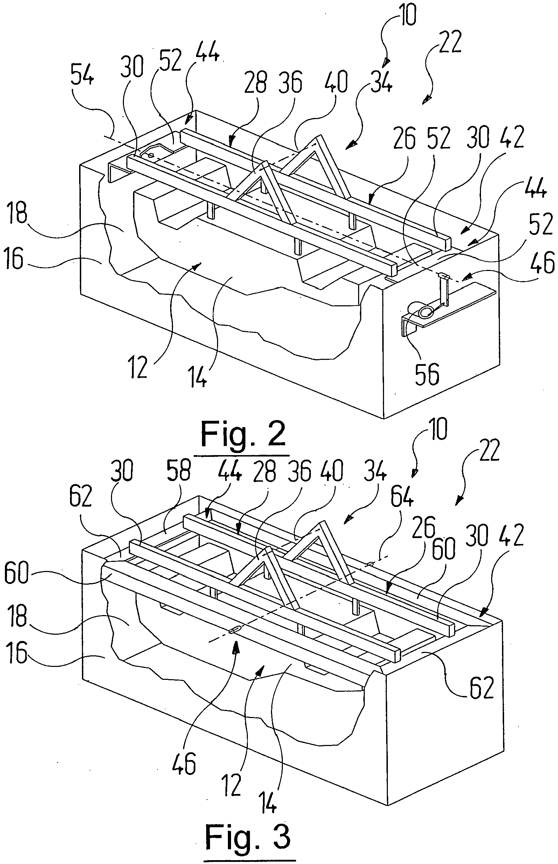

In Figur 2 ist ein Tauchbecken 16 mit einer abgewandelten Tragvorrichtung 42 gezeigt. Diese umfasst zwei Tragelemente 44 in Form von langestreckten stationären Tragprofilen 52, die an den Stirnwänden 16a des Tauchbeckens 16 jeweils um eine Schwenkachse 54 verschwenkbar gelagert sind, die sich horizontal und parallel zur Längsachse des Tauchbeckens 16 erstreckt. Die Bewegungseinrichtung 46 umfasst dort für jedes Tragprofil 52 eine Antriebseinheit 56. Beispielsweise ist eine Antriebswelle eines Motors drehfest mit dem jeweiligen Tragprofil 52 verbunden. Wenn die Befestigungseinrichtung 26 auf den Tragprofilen 52 positioniert ist, kann diese in beide Richtungen um die Schwenkachse 54 verkippt werden.

Figur 3 zeigt ein Tauchbecken 16 mit einer nochmals abgewandelten Tragvorrichtung 42, welche ein Tragelement 44 in Form eines Tragrahmens 58 umfasst. Der Tragrahmen 58 ist aus zwei Längsholmen 60 und zwei Querholmen 62 ausgebildet, welche sich im Wesentlichen entlang der Innenkontur des Tauchbeckens 16 erstrecken. Der Tragrahmen 58 ist an den Längswänden 16b des Tauchbeckens 16 jeweils um eine Schwenkachse 64 verschwenkbar gelagert, die sich horizontal und quer zur Längsachse des Tauchbeckens 16 erstreckt. Die Antriebseinheit 56 ist dort so mit dem Tragrahmen 58 verbunden, dass dieser in beide Richtungen um die Schwenkachse 64 verkippt werden kann.

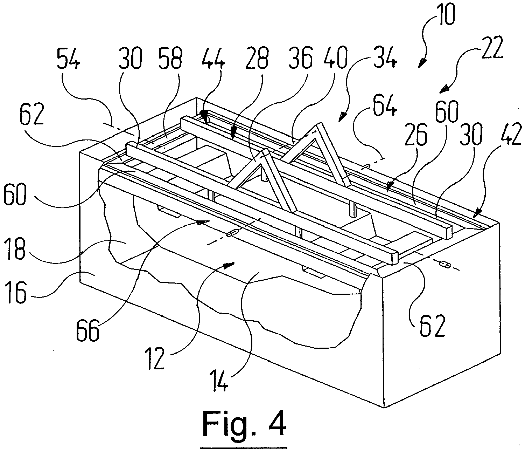

In Figur 4 ist ein nochmals abgewandeltes Tauchbecken 16 veranschaulicht, bei dem ebenfalls der Tragrahmen 58 vorhanden ist. Dieser ist jedoch mittels einer kardanischen Aufhängungseinrichtung 66 sowohl um die Schwenkachse 54 als auch um die Schwenkachse 64 verkippbar gelagert. Hierfür ist eine entsprechende Antriebseinheit 56 vorhanden, welche die beiden Kippbewegungen unabhängig voneinander erlaubt.

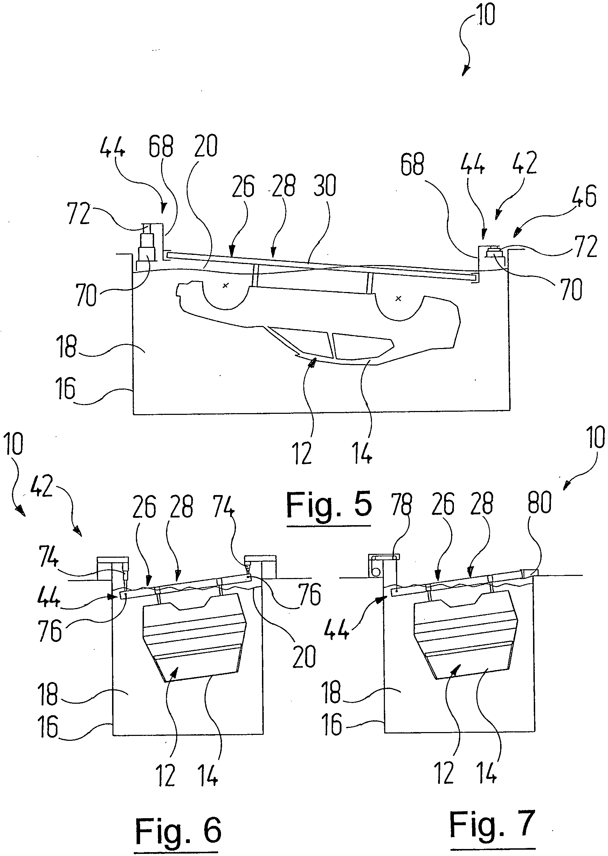

Die Figuren 5 bis 7 veranschaulichen nochmals abgewandelte Tauchbecken 16 mit modifizierten Tragvorrichtungen 42.

Bei dem Ausführungsbeispiel nach Figur 5 sind die Tragelemente 44 der Tragvorrichtung 42 Bauteile der Befestigungseinrichtung 26. Dort sind die Tragelemente 44 als Tragwinkel 68 ausgebildet, die gelenkig an den Stirnseiten der Tragstruktur 28 der Befestigungseinrichtung befestigt sind. Die Bewegungseinrichtung 46 umfasst dort Teleskopeinheiten 70 mit jeweils einem Auflagestempel 72 als Endglied, auf welche die Befestigungseinrichtung 26 dann über die Tragwinkel 68 aufgelegt werden kann, so dass die Befestigungseinrichtung 26 mit der daran befestigten Fahrzeugkarosserie 14 an ihren Stirnseiten angehoben und abgesenkt werden kann.

Auf Grund der gelenkigen Verbindung können die Teleskopeinheiten 70 an den gegenüberliegenden Stirnseiten auch unterschiedlich ausgefahren werden, so dass die Fahrzeugkarosserie 14 eine geneigte Position im Tauchbecken 16 einnimmt, wie es Figur 5 veranschaulicht.

Bei dem Ausführungsbeispiel nach Figur 6 umfasst die Tragvorrichtung 42 als Tragelemente 44 abgewandelte Teleskopeinheiten 74, die zu beiden Seiten längs des Tauchbeckens 16 vorhanden sind und die keinen Auflagestempel, sondern eine Hängeaufnahme 76 führen, in welche die Befestigungseinrichtung 26 gelenkig eingehängt werden kann. Wie Figur 6 zeigt, kann die Fahrzeugkarosserie 14 auf diese Weise quer zur Längsrichtung geneigt werden, wenn sie sich im Tauchbecken 16 befindet.

Figur 7 zeigt eine nochmals abgewandelte Variante, bei der statt der Teleskopeinheiten 74 Zugmittel 78 vorhanden sind, die als Seil- oder Kettenzug ausgebildet sind. Dabei ist als weitere Modifikation vorgesehen, dass die Zugmittel 78 nur an einer Längsseite des Tauchbeckens 16 vorhanden sind. Auf der gegenüberliegenden Längsseite ist die Befestigungseinrichtung 26 mittels Gelenkaufnahmen 80 auf einem feststehenden Höhenniveau gelagert. Wenn die Befestigungseinrichtung 26 mit den Zugmitteln 78 angehoben oder abgesenkt wird, wird sie folglich um eine Schwenkachse verschwenkt, die durch die Gelenkaufnahmen 80 verläuft.

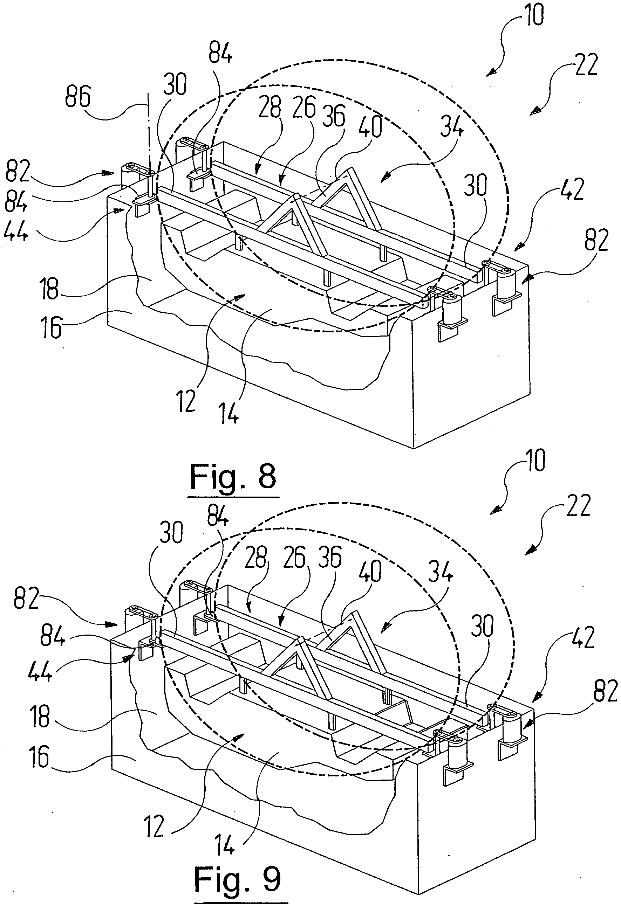

Bei dem Ausführungsbeispiel gemäß den Figuren 8 und 9 weist die Tragvorrichtung eine Positioniereinrichtung 82 auf, mittels welcher die Tragelemente 44 zwischen einer Tragposition, in welcher sie die Befestigungseinrichtung 26 tragen können, und einer davon verschiedenen Parkposition beweglich sind. Die Tragelemente 44 sind dazu als horizontal angeordnete Schwenkplatten 84 ausgebildet, die mittels der Positioniervorrichtung 82 jeweils um eine vertikale Achse 86 verschwenkt werden können, von denen nur in Figur 8 eine gekennzeichnet ist. Die Schwenkplatten 84 sind wieder an den Stirnwänden 16a des Tauchbeckens 16 vorgesehen, so dass die Enden der Längsprofile 30 der Befestigungseinrichtung 26 darauf abgelegt werden können, wenn sich die Schwenkplatten 84 in der Tragposition befinden. Letzteres ist in Figur 9 gezeigt, wogegen Figur 8 die Schwenkplatten 84 in ihrer demgegenüber verschwenkten Parkposition zeigt.

Die Figuren 8 und 9 veranschaulichen ergänzend mit gestrichelten Linien die Drehbahnen, entlang denen sich die freien Enden der Längsholme 30 der Befestigungseinrichtung 26 bewegen, wenn diese mittels der Drehvorrichtung 34 verdreht wird, um die Fahrzeugkarosserie 14 zwischen eine Dach-oben-Ausrichtung und einer Dach-unten-Ausrichtung zu verdrehen. Wie in Figur 8 zu erkennen ist, sind die Schwenkplatten 84 in ihrer Parkposition aus dem Bewegungsweg der Befestigungseinrichtung 26 herausbewegt; dies ist bei den Ausführungsbeispielen der Tragvorrichtung 42 nach den Figuren 1 bis 7 nicht der Fall, dort sind die Tragelemente 44 stets im Drehweg der Befestigungseinrichtung 26.

Bei einer nicht eigens gezeigten Abwandlung können statt der Schwenkplatten 84 auch Schiebeplatten vorhanden sein, welche in einer Linearbewegung zwischen der Parkposition und der Tragposition bewegt werden.

Die Figuren 10A, 10B und 10C veranschaulichen drei Phasen des Eintauchvorgangs bei der Tragvorrichtung 42 gemäß den Figuren 8 und 9. Figur 10A zeigt die Ausgangssituation, nachdem die Transporteinheit 24 die Fahrzeugkarosserie 14 Dach oben an das Tauchbecken 16 heran geführt und oberhalb des Tauchbeckens 16 positioniert hat. Die Schwenkplatten 84 sind zunächst in ihrer Parkposition.

Nun wird die Fahrzeugkarosserie 14 in den Innenraum des Tauchbeckens 16 und die darin befindliche Behandlungsflüssigkeit 18 hinein gedreht, bis die Fahrzeugkarosserie 14 Dach unten ausgerichtet ist, wie es Figur 10B zweigt. Da die Tragelemente 44 ein Weiterdrehen über 180° hinaus nicht stören, kann die Fahrzeugkarosserie 14 im Tauchbad zunächst mittels der Drehvorrichtung 34 der Transporteinheit 24 um die Drehachse 40 hin und her geschwenkt werden.

Dann wird die Befestigungseinrichtung 26 horizontal ausgerichtet, die Schwenkplatten 84 in ihre Tragposition verschwenkt und die Befestigungseinrichtung 26 auf diese abgesenkt, so dass die Fahrzeugkarosseries 14 in dem Tauchbecken 16 verbleibt. Dann kann die Koppeleinrichtung 36 die Befestigungseinrichtung 26 freigeben und die Transporteinheit 24 kann wegbewegt werden. Dies veranschaulicht Figur 10C, bei der keine Koppeleinrichtung 36 gezeigt ist.

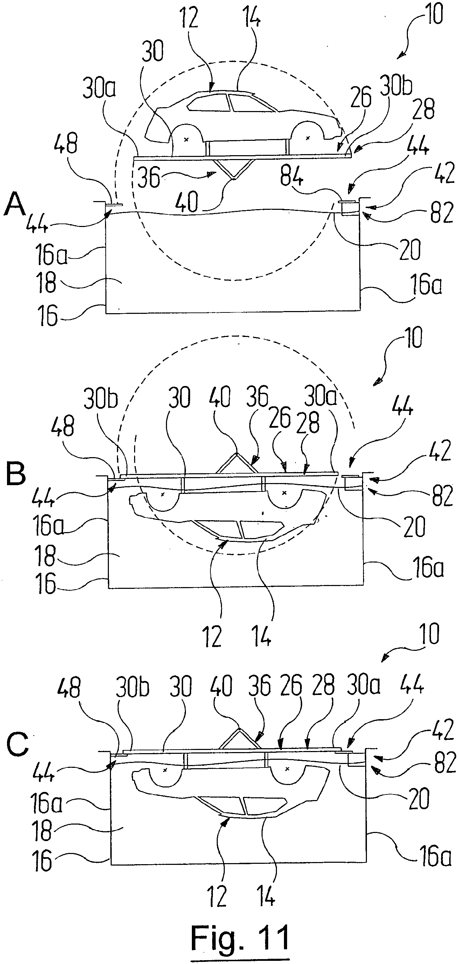

Die Figuren 11A, 11B und 11C veranschaulichen eine nochmals abgewandelte Tragvorrichtung 42. Bei dieser sind nur die Tragelemente 44 an einer Stirnwand 16 a des Tauchbeckens 16 als Schwenkplatten 84 ausgebildet. Die Tragelemente 44 an der gegenüberliegenden Stirnwand 16a sind dagegen wieder als stationäre Tragplatten 48 ausgebildet.

Bei dieser Art der Tragvorrichtung 42 ist die Befestigungseinrichtung 26 außermittig mit der Koppeleinrichtung 36 verbunden, so dass die freien Enden der Längsholme 30 der Befestigungseinrichtung 26 an den gegenüberliegenden Enden sich auf unterschiedlichen Drehbahnen bewegen, wenn die Befestigungseinrichtung 26 mittels der Drehvorrichtung 34 gedreht wird. Dabei sind in der in Figur 11A gezeigten Ausgangssituation die Enden 30a der Längsholme 30 auf der Seite der stationären Tragplatten radial bezogen auf die Drehachse 40 weiter innen angeordnet als die Enden 30b der Längsholme 30 auf der Seite der Schwenkplatten 84.

Zum Eintauchen der Fahrzeugkarosserie 14 wird die Befestigungseinrichtung 26 mit einer Drehrichtung verdreht, bei der die radial weiter innen befindlichen Enden 30a der Längsholme 30 an den stationären Tragplatten 48 vorbeigeführt werden. Figur 11B zeigt die Situation, wenn eine 180°-Drehbewegung absolviert ist. Dann liegen die radial weiter außen befindlichen Enden 30b der Längsholme 30 auf den stationären Tragplatten 48 auf und die gegenüberliegenden Enden 30b sind an den Schwenkplatten 84 so positioniert, dass die Schwenkplatten 84 unter die Enden 30b der Längsholme 30 in ihre Tragposition geschwenkt werden können, so dass die Befestigungseinrichtung 26 auch dort getragen ist. Letzteres veranschaulicht Figur 11C.

## Patentansprüche

1. Tauchbehandlungsanlage zum Tauchbehandeln von Gegenständen (12), insbesondere von Fahrzeugkarosserien (14), mit
a) mindestens einem Tauchbecken (16), welches mit einer Behandlungsflüssigkeit (18) füllbar ist, in welche die zu behandelnden Gegenstände (12) eingetaucht werden können;
b) einem Fördersystem (22), welches die zu behandelnden Gegenstände (12) an das Tauchbecken (16) heran, in den Innenraum des Tauchbeckens (16) hinein, aus dem Tauchbecken (16) heraus und von diesem wegbewegen kann, und welches wenigstens eine Transporteinheit (24) umfasst, die mit einer Befestigungseinrichtung (26) lösbar koppelbar ist, an welcher ein Gegenstand (12) befestigbar ist;
wobei
c) das Tauchbecken (12) eine Tragvorrichtung (42) umfasst, welche in der Lage ist, die von der Transporteinheit (24) getrennte Befestigungseinrichtung (26) mit daran befestigtem Gegenstand (12) zu tragen;
**dadurch gekennzeichnet, dass**
d) die Tragvorrichtung (42) eine Bewegungseinrichtung (46) und wenigstens ein Tragelement (44) aufweist, welches mittels der Bewegungseinrichtung (46) derart beweglich ist, dass die von der Tragvorrichtung (42) getragene Befestigungseinrichtung (26) zwischen wenigstens zwei Tauchausrichtungen bewegbar ist;
und/oder
e) die Tragvorrichtung (42) eine Positioniereinrichtung (82) und wenigstens ein Tragelement (44) aufweist, welches mittels der Positioniereinrichtung (82) zwischen einer Tragposition, in welcher es die Befestigungseinrichtung tragen kann, und einer davon verschiedenen Parkposition beweglich ist.

2. Tauchbehandlungsanlage nach Anspruch 1, **dadurch gekennzeichnet, dass** die Bewegungseinrichtung (46) derart eingerichtet ist, dass das Tragelement (44) in vertikaler Richtung oder zumindest mit einer vertikalen Bewegungskomponente bewegt werden kann.

3. Tauchbehandlungsanlage nach Anspruch 1 oder 2, **dadurch gekennzeichnet, dass** an jeder Stirnseite (16a) und/oder an jeder Längsseite (16b) des Tauchbeckens (16) ein oder mehrere bewegliche Tragelemente (44) vorgesehen sind.

4. Tauchbehandlungsanlage nach Anspruch 1 oder 2, **dadurch gekennzeichnet, dass** das Tauchbecken (16) eine Längsachse definiert und das bewegliche Tragelement (44) ein Tragrahmen (58) ist, welcher um eine horizontale Schwenkachse (54) parallel zur Längsachse des Tauchbeckens (16) und/oder um eine horizontale Schwenkachse (64) quer zur Längsachse des Tauchbeckens (16) verschwenkbar gelagert ist.

5. Tauchbehandlungsanlage nach Anspruch 1 oder 2, **dadurch gekennzeichnet, dass** das Tragelement (44) von der Befestigungseinrichtung (26) umfasst ist.

6. Tauchbehandlungsanlage nach einem der Ansprüche 1 bis 5, **dadurch gekennzeichnet, dass** die Bewegungseinrichtung (46) wenigstens eine Zylindereinheit (50) und/oder wenigstens eine Teleskopeinheit (70; 74) und/oder Zugmittel (78) umfasst, die mit jeweils mindestens einem Tragelement (44) gekoppelt sind.

7. Tauchbehandlungsanlage nach einem der Ansprüche 1 bis 6, **dadurch gekennzeichnet, dass** die Positioniereinrichtung (82) derart eingerichtet ist, dass das Tragelement um eine Achse (84) verschwenkt oder linear bewegt werden kann.

8. Tauchbehandlungsanlage nach Anspruch 7, **dadurch gekennzeichnet, dass** die Achse (84) vertikal verläuft.
